# EUROPEAN PATENT APPLICATION

(11) **EP 3 189 808 A1**
(43) Date of publication of application: **12.07.2017**
(21) Application number: 16150182.0
(22) Date of filing: 05.01.2016
(51) Int. Cl.: A61C 1/14

(54) **CLAMPING STRUCTURE FOR DENTAL HANDPIECE**

(71) Applicant: Ttbio Corporation, Taipei City 407 (TW)
(72) Inventor: SU, Gene, 407 Taichung City (TW)
(74) Representative: Kuhnen & Wacker

(57) **Abstract**

A clamping structure is assembled in a handpiece (3). An embodiment of the clamping structure includes a connecting member for clamping a dental tool (5) and a controlling member (2). Two or more clamping portions (13) are disposed on the connecting member and a distance between the clamping portions (13) is changeable due to a control over the clamping portions (13). The controlling member corresponds to the connecting member and is abutted against the clamping portions (13). The controlling member (2) can be moved relative to the clamping portions (13) to form the control over the clamping portions (13) so as to allow the clamping portions (13) to clamp or to release the dental tool (5). A tungsten carbide coating layer is disposed on a contact surface of the controlling member (2), contact surfaces of the clamping portions (13), or both.

## Description

### BACKGROUND OF THE INVENTION

### Field of the Invention

The present invention relates to a dental handpiece, and more particularly to a clamping structure for dental handpiece.

### Description of the Prior Art

Dental diagnostic subjects mainly include filling decayed teeth, wearing dentures, and so forth. To perform these subjects, the dentist would use a dental handpiece to apply treatments to a patient's teeth. Based on different subjects, different tools, for example, burrs, milling heads, etc., can be assembled to the dental handpiece, and these tools are removable from the dental handpiece. According, a clamping structure is assembled in the dental handpiece to fix the tool with the dental handpiece for operation. The clamping structure can further include a release means for releasing the tool from the dental handpiece, so that the dentist can change the tool according to different treatment subjects.

The shape of the clamping structure of a conventional dental handpiece is mated with the tool, so that the clamping structure can be engaged with the tool. Conversely, the release means is approached by the movement of a button when the button is pressed, so that the button is in contact with and pushes against the clamping structure to force the clamping structure releasing the tool. However, in the conventional, the assembling and the disassembling between the dental handpiece and the tool are in a physical contact manner, so that an abrasion problem comes. Specifically, when the dental handpiece is operated, the button and the clamping structure are also worn against each other. After long-term operation, the abrasion of the button and the clamping structure becomes obvious. Accordingly, even when the button is pressed, the clamping structure would not release the tool smoothly. As a result, using the conventional dental handpiece is inconvenient.

### SUMMARY OF THE INVENTION

One object of the present invention is to provide a clamping structure for dental handpiece, the clamping structure has coating layers on the components which are worn against each other. Therefore, the wearability of the clamping structure can be improved, the abrasion of the clamping structure can be reduced, and the life time of the clamping structure can be extended.

To achieve the above and other objects, a clamping structure for dental handpiece is provided to be assembled in a dental handpiece. The clamping structure comprises a connecting member for clamping a dental tool and a controlling member. At least two clamping portions are disposed on the connecting member, and a distance between the clamping portions is changeable due to a control over the clamping. The controlling member corresponds to the connecting member and is abutted against the clamping portions. The controlling member is capable of being moved relative to the clamping portions to form the control over the clamping portions so as to allow the clamping portions to clamp or to release the dental tool. Wherein, a tungsten carbide coating layer is disposed on a contact surface of the controlling member to be in contact with the clamping portions, contact surfaces of the clamping portions to be in contact with the controlling member, or both the contact surface of the controlling member and the contact surfaces of the clamping portions.

In one embodiment, the connecting member is a hollowed, cylinder shaped chuck with a cut groove defined at a top end of the chuck to form two opposite clamping portions. Each of the clamping portions has a top surface formed on the top end, and each of the clamping portions has a first lateral surface faced the cut groove, tungsten carbide coating layers are disposed on the top surface and the first lateral surface of each of the clamping portions, respectively.

In one embodiment, two opposite abutting portions are extended from the controlling member and extended toward the cut groove of the connecting member. Each of the abutting portions has two second lateral surfaces both abutted against the first lateral surfaces of the clamping portions, and tungsten carbide coating layers are disposed on the second lateral surfaces of each of the abutting portions, respectively. On the other hand, the controlling member has an outer peripheral surface and a tungsten carbide coating layer is disposed on the outer peripheral surface.

### BRIEF DESCRIPTION OF THE DRAWINGS

Fig. 1 illustrates a perspective view of an embodiment of a clamping structure for dental handpiece of the present invention;
Fig. 2 illustrates a plan view of the embodiment of the clamping structure for dental handpiece;
Fig. 3 illustrates another plan view of the embodiment of the clamping structure for dental handpiece;
Fig. 4 illustrates a schematic sectional view showing the embodiment of the clamping structure for dental handpiece is assembled in a dental handpiece; and
Fig. 5 illustrates an operational sectional view of the embodiment of the clamping structure for dental handpiece.

### DETAILED DESCRIPTION OF THE PREFERRED EMBODIMENTS

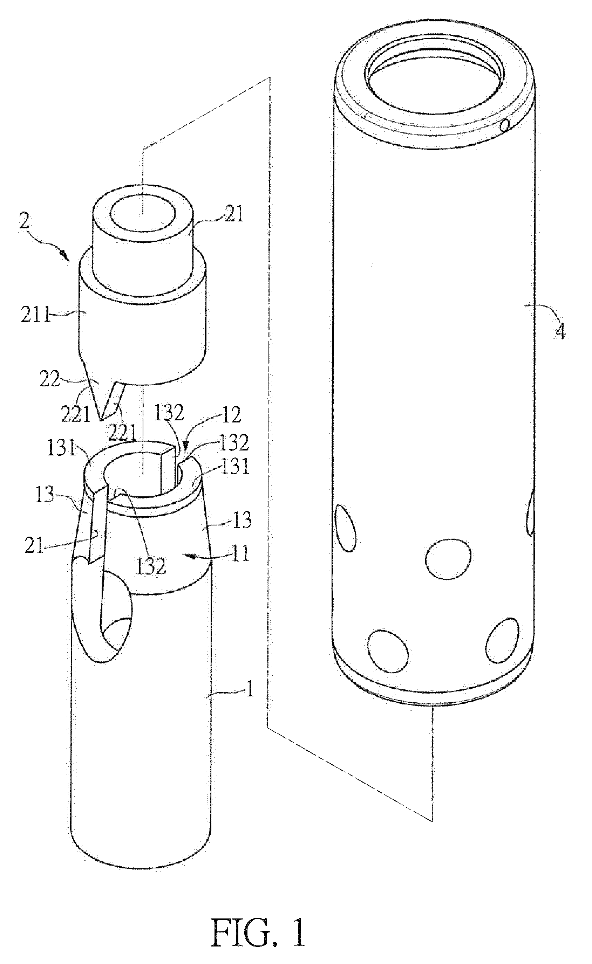

Please refer to Fig. 1, illustrating an embodiment of a clamping structure for dental handpiece according to the present invention. The clamping structure for dental handpiece is assembled in a dental handpiece (not shown). The clamping structure comprises a positioning cylinder 4, a connecting member, and a controlling member 2. The connecting member is adapted to clamp different dental tools, for example, burrs, milling heads, etc., and the controlling member 2 is adapted to control the connecting member to clamp or to release the dental tool.

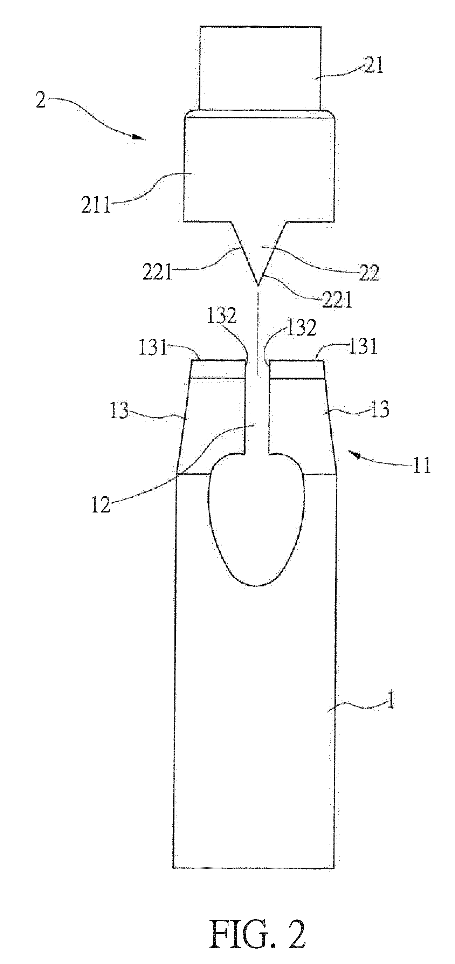

As shown in Figs. 1 and 2, the positioning cylinder 4 is a hollowed linear cylinder, and the connecting member is assembled in the positioning cylinder 4. The connecting member is a hollowed, cylinder shaped chuck 1, and the chuck 1 defines a space therein for receiving different dental tools. One end of the chuck 1 is defined as a driven end 11, and a cut groove 12 is defined at the driven end 11 to form two opposite clamping portions 13. Because of the cut groove 12, a gap is defined between the two clamping portions 13. Accordingly, when the two clamping portions 13 are forced, the two clamping portions 13 are slightly deflected relative to the chuck 1, so that the distance between the two clamping portions 13 is changed. When the two clamping portions 13 are not forced, the two clamping portions 13 can fix and clamp a dental tool (not shown) inserted in the chuck 1. Conversely, when the two clamping portions 13 are forced and slightly deflected outward, the two clamping portions 13 move away from each other to release the dental tool.

Specifically, each of the two clamping portions 13 has a top surface 131 formed on the top end, and each of the clamping portions 13 has a first lateral surface 132 faced the cut groove 12.

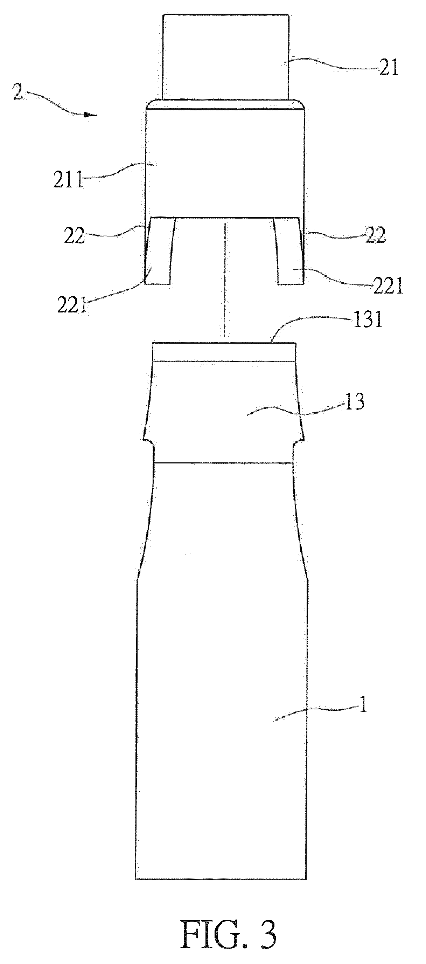

On the other hand, as shown in Figs. 1 to 3, the controlling member 2 has a cylinder body 21, and two abutting portions 22 are extended from the bottom of the cylinder body 21 and opposite to each other. The two abutting portions 22 are respectively located at two sides of the bottom of the body 21. Each of the abutting portions 22 has a sharp angle portion, and the width of the sharp angle portion is gradually reduced from the top to the bottom. The controlling member 2 is assembled in the positioning cylinder 4 and corresponds to the chuck 1. In detail, the two abutting portions 22 of the controlling member 2 are extended toward the cut groove 12 and abutted against the two clamping portions 13. Specifically, two sides of each of the abutting portions 22 has two second lateral surfaces 221, and the two second lateral surfaces 221 of each of the abutting portions 22 are abutted against the first lateral surfaces 131 of the two clamping portions 13, in a one-by-one manner.

A tungsten carbide coating (or called wolfram carbide coating, abbreviated as WCC) layer is disposed on a contact surface of the controlling member 2 to be in contact with the clamping portions 13, contact surfaces of the clamping portions 13 to be in contact with the controlling member 2, or both the contact surface of the controlling member 2 and the contact surfaces of the clamping portions 13, so that hardness and wearability of the contact surface of the controlling member 2, the clamping portions 13, or both can be improved. In this embodiment, a tungsten carbide coating layer (not shown) is disposed on the first lateral surface 132 of each of the clamping portions 13 of the chuck 1, and a tungsten carbide coating layer (not shown) is disposed on the two second lateral surfaces 221 of each of the abutting portions 22 of the controlling member 2. In addition, tungsten carbide coating layers (not shown) are also disposed on the top surface 131 of each of the clamping portions 13 and an outer peripheral surface 211 of the body 21 of the controlling member 2, respectively.

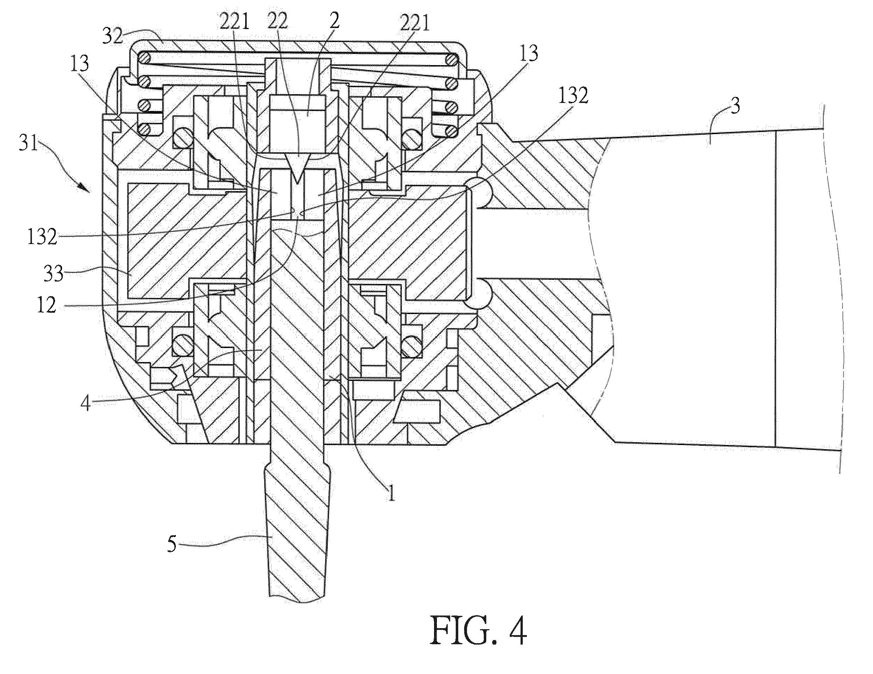

Accordingly, an operational schematic view showing the embodiment of the clamping structure is assembled in a handpiece is illustrated as Fig. 4. As shown, a rotating device 33 driven by pneumatic means is assembled in a head 31 of a dental handpiece 3, the positioning cylinder 4 is fixed with the rotating device 33, and a dental tool 5 is inserted into the chuck 1 and clamped by the two clamping portions 13. Therefore, the rotating device 33 drives the positioning cylinder 4 to rotate, and the positioning cylinder 4 thus drives the dental tool 5 to rotate. Hence, a dentist can use the dental handpiece 3 to apply diagnostic operations to a patient.

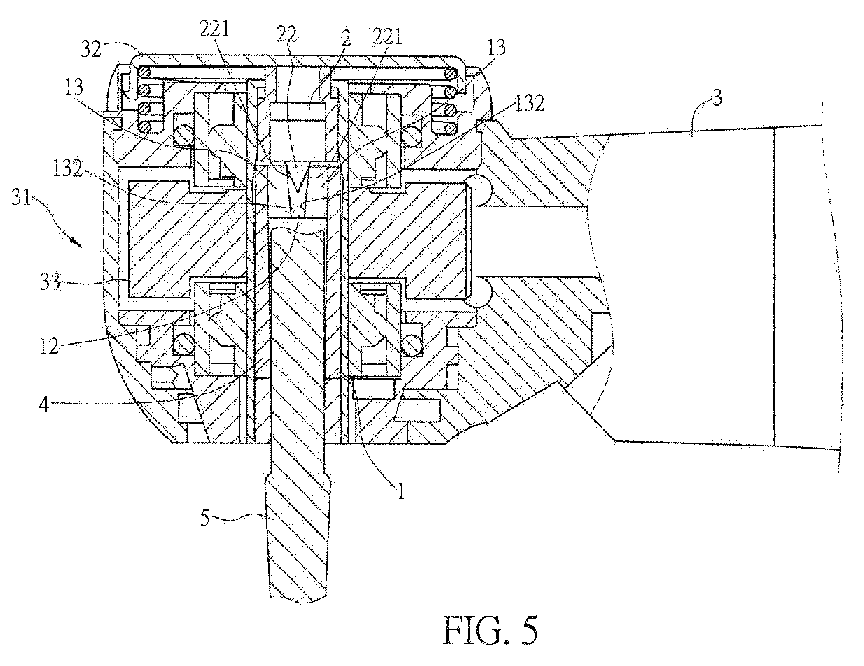

Moreover, a button 32 is assembled to the head 31 and connected to the controlling member 2. Therefore, when a user presses the button 32, the controlling member 2 is moved downward. Accordingly, as shown in Fig. 5, when the button 32 is pressed to move the controlling member 2 downward, the two clamping portions 13 of the chuck 1 are pushed against the abutting portions 22 and departed from each other because of the shape of the abutting portion 22. Hence, the two clamping portions 13 are moved away from each other, so the dental tool 5 is released from the two clamping portions 13.

During the operation, the two abutting portions 22 and the two clamping portions 13 would be in contact with and slid relative to each other; in embodiments of the present invention, the tungsten carbide coating layers will improve the hardness and the wearability of the contact surfaces. Therefore, the abrasion of the clamping structure can be reduced, and the life time of the clamping structure can be extended.

## Claims

1. A clamping structure for dental handpiece assembled in a dental handpiece (3), the clamping structure comprising:
a positioning cylinder (4);
a connecting member for clamping a dental tool (5), the connecting member assembled in the positioning cylinder (4), wherein at least two clamping portions (13) are disposed on the connecting member, and a distance between the clamping portions (13) is changeable due to a control over the clamping portions (13); and
a controlling member (2) assembled in the positioning cylinder (4) and corresponding to the connecting member, wherein the controlling member (2) is abutted against the clamping portions (13), the controlling member (2) is capable of being moved relative to the clamping portions (13) to form the control over the clamping portions (13) so as to allow the clamping portions (13) to clamp or to release the dental tool (5);
**characterized in that**, a tungsten carbide coating layer is disposed on a contact surface of the controlling member (2) to be in contact with the clamping portions (13), contact surfaces of the clamping portions (13) to be in contact with the controlling member (2), or both the contact surface of the controlling member (2) and the contact surfaces of the clamping portions (13).

2. The clamping structure for dental handpiece according to claim 1, **characterized in that** the connecting member is a hollowed, cylinder shaped chuck (1) with a cut groove (12) defined at a top end of the chuck (1) to form two opposite clamping portions (13), wherein each of the clamping portions (13) has a top surface (131) formed on the top end, and each of the clamping portions (13) has a first lateral surface (132) faced the cut groove (12), and tungsten carbide coating layers are disposed on the top surface (131) and the first lateral surface (132) of each of the clamping portions (13), respectively.

3. The clamping structure for dental handpiece according claim 2, **characterized in that** two opposite abutting portions (22) are extended from the controlling member (2) and extended toward the cut groove (12) of the connecting member, each of the abutting portions (22) has two second lateral surfaces (221) both abutted against the first lateral surfaces (132) of the clamping portions (13), and tungsten carbide coating layers are disposed on the two second lateral surfaces (221) of each of the abutting portions (22), respectively.

4. The clamping structure for dental handpiece according to claim 3, **characterized in that** the controlling member (2) has an outer peripheral surface (211) and a tungsten carbide coating layer is disposed on the outer peripheral surface (211).

5. The clamping structure for dental handpiece according to claim 1, **characterized in that** an abutting portion (22) is extended from the controlling member (2), the abutting portion (22) has second lateral surfaces (221) corresponding to and abutted against the clamping portions (13), a tungsten carbide coating layer is disposed on each of the second lateral surfaces (221) of the abutting portion (22).
